# EUROPÄISCHE PATENTSCHRIFT

(11) **EP 1 286 916 B1**
(45) Veröffentlichungstag und Bekanntmachung des Hinweises auf die Patenterteilung: **03.11.2004**
(21) Anmeldenummer: 01949235.4
(22) Anmeldetag: 01.06.2001
(51) Int. Cl.: C01B 31/10, B01D 53/86

(54) **HERSTELLUNG VON AKTIVKOHLE MIT ERHÖHTER KATALYTISCHER AKTIVITÄT**
PRODUCTION OF ACTIVATED CARBON EXHIBITING AN ELEVATED CATALYTIC ACTIVITY
FABRICATION DE CHARBON ACTIF A ACTIVITE CATALYTIQUE AMELIOREE

(30) Priorität: 09.06.2000 DE 10028654
(43) Veröffentlichungstag der Anmeldung: 05.03.2003
(73) Patentinhaber: HELSA-WERKE HELMUT SANDLER GmbH & CO. KG, 95482 Gefrees (DE)
(72) Erfinder: TRNETSCHEK, Steffan, 95482 Gefrees (DE); BUSSE, Gabriele, 93561 Ködnitz/Fölschnitz (DE); SACHMANN, Eberhard, 14727 Premnitz (DE)
(74) Vertreter: LOUIS- PÖHLAU- LOHRENTZ
(86) Internationale Anmeldenummer: PCT/DE2001/002087
(87) Internationale Veröffentlichungsnummer: WO 2001/094261

(56) Entgegenhaltungen:
- WO-A-95/33556
- DD-A- 139 067
- US-A- 4 362 646
- US-A- 5 700 436
- US-A- 6 114 273
- DATABASE WPI Section Ch, Week 200035 Derwent Publications Ltd., London, GB; Class E36, AN 2000-400849 XP002179169 & CN 1 250 117 A (SHANXI INST COAL CHEM ACAD SINICA), 12. April 2000 (2000-04-12)
- TOMLINSON J B ET AL: "THE PREPARATION AND ADSORPTIVE PROPERTIES OF AMMONIA-ACTIVATED VISCOSE RAYON CHARS" CARBON, ELSEVIER SCIENCE PUBLISHING, NEW YORK, NY, US, Bd. 31, Nr. 1, 1993, Seiten 13-20, XP000343957 ISSN: 0008-6223

## Beschreibung

Die vorliegende Erfindung betrifft ein Verfahren zur Herstellung von Aktivkohle mit erhöhter katalytischer Aktivität, wobei das Verfahren von einem Aktivkohlesubstrat ausgeht. Insbesondere wird bei dem erfindungsgemäßen Verfahren von einem Aktivkohlesubstrat auf der Basis von kohlenstoffhaltigen verkokbaren Rohstoffen ausgegangen.

Aktivkohle mit einer erhöhten katalytischen Aktivität ist in verschiedenen Bereichen seit geraumer Zeit von besonderem Interesse. Für den Einsatz zur Reinhaltung der Luft, insbesondere bei Dünnschichtfiltern, ist Aktivkohle mit einer erhöhten Aktivität für SO₂ von großer Bedeutung, da sie SO₂ adsorptionskatalytisch in feuchter Luft in Schwefelsäure umwandelt und adsorbiert. Die katalytische Aktivität ist dabei auf den Stickstoffanteil in der Aktivkohle zurückzuführen, wobei sich eine kontrollierte Stickstoffeintragung in die Aktivkohle während ihrer Herstellung gegenüber der Verwendung stickstoffreicher Ausgangsstoffe als vorteilhaft herausgestellt hat.

Aus den US-Patenten Nr. 5,352,370, 5,356,849 und 5,444,031 sind z.B. Verfahren bekannt, die von einer Fett- oder Steinkohle ausgehen, die einer Niedertemperatur-Carbonisierung und Oxidation unterzogen wird, gefolgt von einem Kontaktieren mit einer geringen Menge einer stickstoffhaltigen Verbindung, wie z.B. Harnstoff, während der dann folgenden Calcinierung und Kondensation der Kohlenstoffstruktur. Diese Calcinierung erfolgt bei Temperaturen zwischen 850 und 950 °C und wird unter einer inerten Atmosphäre durchgeführt. Nachfolgend werden die stickstoffbehandelten Hochtemperaturkohlen dann bis zu einer erwünschten Dichte bei Temperaturen oberhalb von 700 °C in Wasserdampf oder Kohlendioxid ohne weitere Zugabe von Hilfsmitteln, wie z.B. Luft, aktiviert. Abschließend wird die calcinierte und aktivierte Aktivkohle in einer sauerstoffreien Atmosphäre auf Temperaturen von unter 400 °C abgekühlt, wobei auch eine Abkühlung auf unter 200 °C offenbart ist. Lignocellulosematerialien sind allgemein als Startmaterialien für die Herstellung der Ausgangsaktivkohle erwähnt, ohne daß diese Druckschriften eine nähere Beschreibung oder Erläuterung des Einsatzes dieser Materialien enthalten.

Als Einsatzgebiet für die in dem vorstehend genannten Stand der Technik beschriebenen katalytisch wirksamen Aktivkohlen ist die katalytische Umsetzung von H₂S, SOₓ, NOₓ, Peroxiden und/oder Chloraminen in flüssigen und/oder gasförmigen Medien angegeben.

Aus der DE 23 52 790 C3 ist ein Verfahren zur Entfernung von Schwefeloxiden und/oder Stickstoffoxiden aus Abgasen bekannt, bei dem aktivierte bzw. nachbehandelte Aktivkohle eingesetzt wird. Diese nachbehandelte Aktivkohle wurde durch Kontaktierung von Aktivkohle, die offenbarungsgemäß aus Materialien wie Holzkohle, Koks, Kokosnußschalen usw. hergestellt wurde, mit gasförmigem Ammoniak unter Hitze erzeugt. Es wird dabei offenbart, daß das Ammoniak in einer Mischung in einem inerten Trägergas, wie z.B. Stickstoff oder Rauchgas zum Einsatz gelangt. Der Anteil des Inertgases liegt dabei im Bereich von 0 bis etwa 90 Vol.-%, bezogen auf das gasförmige Ammoniak. Das Vorhandensein anderer, für die Aktivierung bedeutsamer Gase ist nicht offenbart.

Aufgabe der vorliegenden Erfindung ist es den Stand der Technik zumindest um ein weiteres Verfahren zur Herstellung von Aktivkohle mit erhöhter katalytischer Aktivität zu bereichern, insbesondere um ein Verfahren zur Herstellung von Aktivkohle mit erhöhter katalytischer Aktivität für SO₂. Es ist weiterhin Aufgabe der vorliegenden Erfindung ein Verfahren bereitzustellen, bei dem möglichst wenig Verfahrensschritte zur Herstellung von Aktivkohle mit erhöhter katalytischer Aktivität erforderlich sind, wobei das Verfahren möglichst zu einem definierten Produkt führen und besonders wirtschaftlich durchführbar sein soll.

Die vorliegende Aufgabe wird erfindungsgemäß durch ein Verfahren gemäß dem beigefügten Anspruch 1 gelöst. Eine alternative Lösung ist Gegenstand von Anspruch 2. Vorteilhafte Ausgestaltungen dieses Verfahrens sind Gegenstand der Unteransprüche 3 bis 9.

Das erfindungsgemäße Verfahren ist besonders vorteilhaft, weil es im Grunde aus einem einzigen Verfahrensschritt besteht, der aus drei kontinuierlich ineinander übergehende Teilschritte besteht. Dies ist bereits eine deutliche Vereinfachung gegenüber den aus dem Stand der Technik bekannten Verfahren, bei denen die Stickstoffanreicherung in der Aktivkohle und die Aktivierung in zwei voneinander deutlich getrennten Verfahrensschritten durchgeführt wird.

Dies ist durch den erfindungsgemäßen Einsatz eines Reaktionsgasgemischs für die Aktivierung und Erhöhung des Stickstoffanteils in der Aktivkohle möglich, das gleichzeitig NH₃ und CO₂ und/oder H₂O enthält. Nach der erfolgten Erhöhung des Stickstoffanteils in der Aktivkohle unter gleichzeitiger Aktivierung derselben ist schließlich nur noch ein Abkühlen des aktivierten Aktivkohlesubstrats erforderlich, das allgemein unter der Atmosphäre des vorstehend genannten Reaktionsgasgemisches oder inerten Bedingungen durchgeführt wird.

Bei einer alternativen Ausgestaltung des erfindungsgemäßen Verfahrens wird das zu aktivierende Aktivkohlesubstrat mit Ammoniak-Wasser getränkt, so daß die Aktivierung unter Zudosierung von CO₂ und/oder H₂O erfolgt. Bei dieser Verfahrensvariante wird vorteilhafterweise eine Zudosierung von gasförmigem Ammoniak überflüssig und es ist nur noch eine geringe Einleitung von Dampf oder Wasser erforderlich. Hierdurch wird der verfahrenstechnische Aufwand erheblich herabgesetzt.

Beide Verfahren sind problemlos in einem elektrisch beheizten Ofen durchführbar. In einer Weiterbildung der vorliegenden Erfindung ist bei beiden Verfahrensvarianten eine Stützheizung im Ofen vorgesehen, die durch eine Gasverbrennung erzielt wird. Da eine solche Verbrennung mit Luft erfolgt, ist aufgrund des normalen Stickstoffanteils an der Luft in dem Reaktionsgasgemisch weiterhin N₂ enthalten.

In einer besonderen Ausgestaltung des erfindungsgemäßen Verfahrens erfolgt das Aufheizen durch Einführen des Aktivkohlesubstrats in einen auf Aktivierungstemperatur vorgeheizten Reaktor. Hierbei ist selbstverständlich, daß das Aktivkohlesubstrat, wie im übrigen während der gesamten Verfahrensdauer, ausreichend bewegt wird, um eine gleichmäßige Kontaktierung des Aktivkohlesubstrats mit den die erforderliche Wärme übertragenden Reaktorwänden und der Gasphase sicherzustellen. Bei den Untersuchungen, die im Rahmen und zur Überprüfung der vorliegenden Erfindung durchgeführt wurden, hat sich überraschenderweise herausgestellt, daß, die übliche Agitation des Aktivkohlesubstrats vorausgesetzt, sich eine Aufheizrate einstellt, die keiner aufwendigen Regelung und besonderen Überprüfung bedarf. Trotz dieser unerwarteten Vereinfachung bei der Verfahrensführung überzeugt die erfindungsgemäß hergestellte Aktivkohle mit erhöhter katalytischer Aktivität durch ihre besonderen katalytischen Eigenschaften.

Erfindungsgemäß beträgt die Aktivierungstemperatur 800 bis 970 °C, da die Erhöhung des Stickstoffanteils und die Aktivierung des Aktivkohlesubstrats mit dem erfindungsgemäßen Reaktionsgasgemisch in diesem Temperaturbereich allgemein zu Aktivkohlen mit besonders günstigen katalytischen und Adsorptionseigenschaften führt. Bevorzugt ist dabei ein Temperaturbereich von 880 bis 970 °C.

In einer besonderen Ausgestaltung des erfindungsgemäßen Verfahrens enthält das zum Aktivieren des aufgeheizten Aktivkohlesubstrats verwendete Gasgemisch 1 bis 20 Vol.-% NH₃, 10 bis 60 Vol.-% H₂O und 5 bis 50 Vol.-% CO₂, wobei 1 bis 10 Vol.-% NH₃, 10 bis 30 Vol.-% H₂O und 5 bis 15 Vol.-% CO₂ bevorzugt sind. Der Restanteil ist Stickstoff. Das Aktivieren wird allgemein über einen Zeitraum von 30 bis 90 Minuten durchgeführt, insbesondere über einen Zeitraum von 45 bis 75 Minuten. Die Aktivierung wird dabei im allgemeinen bis zum Erreichen der gewünschten katalytischen Aktivität für SO₂ durchgeführt oder bis der Umsatz zur Herstellung eines Aktivkohleprodukts mit der angestrebten Porosität erreicht ist.

In einer besonders bevorzugten Ausgestaltung des erfindungsgemäßen Verfahrens ist das eingesetzte Aktivkohlesubstrat eine aus Kokosnußschalen hergestellte Aktivkohle. Gerade Aktivkohle auf der Basis von Kokosnußschalen eignet sich besonders zur Herstellung von Aktivkohle mit erhöhter katalytischer Aktivität, da sie bereits von Haus aus über eine äußerst günstige Porenstruktur verfügt, was sich überraschenderweise besonders günstig auf die Erhöhung des Stickstoffanteils und somit auf die katalytische Aktivität sowie auf die adsorptiven Eigenschaften des Verfahrensprodukts auswirkt. Gleichzeitig ist dieses Ausgangsmaterial kommerziell in gleichbleibender Qualität in ausreichender Menge und preisgünstig zu erhalten.

Schließlich ist es bevorzugt, wenn das Abkühlen des aktivierten Aktivkohlesubstrats bis zu einer Temperatur < 200 °C durchgeführt wird. Hierdurch wird in der Reaktionsgas-Atmosphäre sichergestellt, daß eine ungewollte Veränderung des aktivierten Aktivkohlesubstrats aufgrund von Luftsauerstoff nicht eintritt. Darüberhinaus läßt sich das aktivierte Aktivkohlesubstrat bei einer Temperatur < 200 °C auch problemlos aus dem verwendeten Reaktor austragen und einer Zwischenlagerung oder Weiterverarbeitung zuführen, ohne daß besondere Vorkehrungen hinsichtlich der Temperaturbeständigkeit der mit dem Verfahrensprodukt in Kontakt kommenden Geräte und Behälter erforderlich sind.

Das vorstehend allgemein beschriebene, erfindungsgemäße Verfahren wird nachfolgend anhand von Ausführungsbeispielen näher erläutert.

Bei den nachfolgend beschriebenen Beispielen wurde jeweils 350 g Aktivkohle, die aus Kokosnußschalen hergestellt worden war, in ein Metallrohr mit einem Durchmesser von 90 mm und einer Länge von 600 mm eingefüllt. Danach wurde das Rohr dann waagerecht in einen auf Aktivierungstemperatur aufgeheizten Röhrenofen eingesetzt, wobei die Temperatur während des Aufheizens der Aktivkohle im Rohr konstant gehalten wurde. Das Rohr wurde mit einer Geschwindigkeit von etwa 6 Umdrehungen/Minute gedreht. Nachdem die Aktivkohle auf Aktivierungstemperatur gebracht worden war, wurde das zur Erhöhung der katalytischen Aktivität und zur Aktivierung verwendete Gas durch das Rohr und über die Aktivkohle geleitet, wobei das Rohr nach Ablauf von 60 Minuten zusammen mit der Aktivkohle aus dem Röhrenofen entnommen wurde. Das Verfahrensprodukt wurde dann unter N₂-Atmosphäre auf eine Temperatur < 200 °C abgekühlt. Abschließend wurde das Rohr entleert und die so erhaltene und behandelte Aktivkohle einer entsprechenden Analytik unterzogen.

Die analytischen Daten des als Aktivkohlesubstrat verwendeten Ausgangsmaterials auf der Basis von Kokosnußschalen sind wie folgt:

| | |
|---|---|
| Jodzahl | 670 mg/g |
| | |
| spezif. Oberfläche | 620 m²/g |
| gemäß _{N2-Adsorption} | |
| | |
| Mikroporenvolumen | 0,272 cm³/g |
| gemäß N₂-Adsorption | |
| | |
| H₂O₂-Zersetzung | |
| Δ T nach 5 Min. | 1,1 K |
| Δ T nach 10 Min. | 1,8 K |
| | |
| Dünnschichtbett (2 mm) | |
| SO₂-Durchbruch | |
| nach 5 Min. | 67 % |
| nach 10 Min. | 80 % |
| nach 15 Min. | 87 % |
| | |
| umgesetzte SO₂- Menge | 7 mg/g |
| | |
| Stickstoffgehalt | 0,08 % |

### Beispiel 1

Entsprechend den vorstehenden Angaben wurde ein Aktivkohlesubstrat behandelt. Als Gasgemisch wird eine Kombination von NH₃, CO₂ und H₂O verwendet. Dieses Gasgemisch wird durch Erhitzen einer 25%-igen Ammoniaklösung unter gleichzeitigem Einleiten von CO₂-Gas erhalten. Die Aktivierungstemperatur lag in einem Bereich von 900 bis 920 °C.

Der Abbrand des Kohlenstoffs der Aktivkohle beträgt maximal 16 %. Aufgrund der Veränderung der Oberflächenstruktur der Aktivkohle durch Einbau von Stickstoff, wobei der Stickstoffgehalt der Aktivkohle von etwa 0,08 % auf 0,3 bis 0,4 % ansteigt, sowie des erhöhten Abbrands wird eine Erhöhung der spezifischen Oberfläche, des Mikroporenvolumens, der Jodzahl, der Reaktionsfähigkeit und der Adsorptionskapazität für SO₂ sowie für n-Butan und Toluol erhalten.

Die Durchleitung des genannten Gasgemisches erfolgte mit folgender Rate: 36 l/h NH₃, 102 l/h H₂O und 70 l/h CO₂, was zu einer Gesamtgasmenge von 208 l/h führt. Prozentual setzte sich das verwendete Gasgemisch aus 17 Vol.-% NH₃, 49 Vol.-% H₂O und 34 Vol.-% CO₂ zusammen.

Nach dem Abkühlen besaß das Verfahrensprodukt folgende Eigenschaften:

| | |
|---|---|
| Jodzahl | 1130 mg/g |
| | |
| spezifi. Oberfläche | 960 m²/g |
| gemäß N₂-Adsorption | |
| | |
| Mikroporenvolumen | 0,246 cm³/g |
| Gemäß N₂-Adsorption | |
| | |
| H₂O₂-Zersetzung | |
| Δ T nach 5 Min. | 19,0 K |
| Δ T nach 10 Min. | 23,2 K |
| | |
| Dünnschichtbett (2 mm) | |
| SO₂-Durchbruch | |
| nach 5 Min. | 15 % |
| nach 10 Min. | 17 % |
| nach 15 Min. | 19 % |
| | |
| umgesetzte SO₂-Menge | 38 mg/g |

### Beispiel 2

Es wurde genauso verfahren wie in Beispiel 1, außer daß die Durchleitung des Gasgemisches mit folgender Rate erfolgte: 30 l/h NH₃, 85 l/h H₂O und 70 l/h CO₂, was zu einer Gesamtgasmenge von 185 l/h führte. Prozentual setzte sich das in diesem Beispiel verwendete Gasgemisch aus 16 Vol.-% NH₃, 46 Vol.-% H₂O und 38 Vol.-% CO₂ zusammen.

Das so erhaltene Verfahrensprodukt besaß die nachstehend aufgeführten Eigenschaften:

| | |
|---|---|
| Jodzahl | 1040 mg/g |
| | |
| spezifi. Oberfläche | 930 m/g |
| gemäß N₂-Adsorption | |
| | |
| Mikroporenvolumen | 0,377 cm³/g |
| gemäß N₂-Adsorption | |
| | |
| H₂O₂-Zersetzung | |
| Δ T nach 5 Min. | 17,5 K |
| Δ T nach 10 Min. | 21,5 K |
| | |
| Dünnschichtbett (2 mm) | |
| SO₂-Durchbruch | |
| nach 5 Min. | 12 % |
| nach 10 Min. | 15 % |
| nach 15 Min. | 17 % |
| | |
| umgesetzte SO₂-Menge | 39 mg/g |

### Beispiel 3

Bei diesem Beispiel wurde ebenfalls wie in Beispiel 1 erfahren, außer daß die Durchleitung des Gasgemisches mit folgender Rate erfolgte: 24 l/h NH₃, 68 l/h H₂O und 70 l/h CO₂, was zu einer Gesamtgasmenge von 162 l/h führte. Prozentual setzte sich das in diesem Beispiel verwendete Gasgemisch aus 15 Vol.-% NH₃, 42 Vol.-% H₂O und 43 Vol.-% CO₂ zusammen.

Das auf diese Weise erhaltene Verfahrensprodukt besaß folgende Eigenschaften:

| | |
|---|---|
| Jodzahl | 1050 mg/g |
| | |
| spezifi. Oberfläche | 840 m²/g |
| gemäß N₂-Adsorption | |
| | |
| Mikroporenvolumen | 0,349 cm³/g |
| gemäß N₂-Adsorption | |
| | |
| H₂O₂-Zersetzung | |
| Δ T nach 5 Min. | 17,1 K |
| Δ T nach 10 Min. | 20,5 K |
| | |
| Dünnschichtbett (2 mm) | |
| SO₂-Durchbruch | |
| nach 5 Min. | 14 % |
| nach 10 Min. | 16 % |
| nach 15 Min. | 18 % |
| | |
| umgesetzte SO₂-Menge | 37 mg/g |

### Beispiel 4

Bei der Durchführung dieses Beispiels wurde ein Gasgemisch gemäß Beispiel 1 verwendet, die Aktivierungstemperatur betrug jedoch 830 bis 850 °C.

Das so erhaltene Verfahrensprodukt besaß folgende Eigenschaften:

| | |
|---|---|
| Jodzahl | 1100 mg/g |
| | |
| spezifi. Oberfläche | 890 m²/g |
| gemäß N₂-Adsorption | |
| | |
| Mikroporenvolumen | 0,380 cm³/g |
| gemäß N₂-Adsorption | |
| | |
| H₂O₂-Zersetzung | |
| Δ T nach 5 Min. | 15,4 K |
| Δ T nach 10 Min. | 21,1 K |
| | |
| Dünnbettschicht (2 mm) | |
| SO₂-Durchbruch | |
| nach 5 Min. | 50 % |
| nach 10 Min. | 60 % |
| nach 15 Min. | 70 % |
| | |
| umgesetzte SO₂-Menge | 16 mg/g |

### Beispiel 5

Auch bei der Durchführung dieses Beispiels wurde ein Gasgemisch gemäß Beispiel 1 verwendet, die Aktivierungstemperatur wurde hingegen auf 880 bis 900 °C eingestellt.

Das unter diesen Bedingungen erhaltene Verfahrensprodukt besaß folgende Eigenschaften:

| | |
|---|---|
| Jodzahl | 1130 mg/g |
| | |
| spezifi. Oberfläche | 960 m²/g |
| gemäß N₂-Adsorption | |
| | |
| Mikroporenvolumen | 0,246 cm³/g |
| gemäß N₂-Adsorption | |
| | |
| H₂O₂-Zersetzung | |
| Δ T nach 5 Min. | 18,1 K |
| Δ T nach 10 Min. | 22,6 K |
| | |
| Dünnschichtbett (2 mm) | |
| SO₂-Durchbruch | |
| nach 5 Min. | 15 % |
| nach 10 Min. | 17% |
| nach 15 Min. | 19 % |
| | |
| umgesetzte SO₂-Menge | 38 mg/g |

### Beispiel 6

Bei diesem Beispiel wurde ebenfalls ein Gasgemisch gemäß Beispiel 1 verwendet. Die eingestellte Aktivierungstemperatur betrug aber 930 bis 950 °C.

Das unter diesen Bedingungen erhaltene Verfahrensprodukt besaß folgende Eigenschaften:

| | |
|---|---|
| Jodzahl | 1110 mg/g |
| | |
| spezifi. Oberfläche | 1080 m²/g |
| gemäß N2-Adsorption | |
| | |
| Mikroporenvolumen | 0,377 cm³/g |
| gemäß N₂-Adsorption | |
| | |
| H₂O₂-Zersetzung | |
| Δ T nach 5 Min. | 16,6 K |
| Δ T nach 10 Min. | 21,3 K |
| | |
| Dünnschichtbett (2mm) | |
| SO₂-Durchbruch | |
| nach 5 Min. | 17 % |
| nach 10 Min. | 18 % |
| nach 15 Min. | 20 % |
| | |
| umgesetzte SO₂-Menge | 37 mg/g |

### Beispiel 7 und 8

Die Beispiele 7 und 8 wurden in einem technischen Maßstab und auf kontinuierliche Weise durchgeführt. Bei dem kontinuierlichen Prozeß der Nachaktivierung von Kokosnußschalen-Aktivkohle werden Aktivkohle und Reaktionsgas im Gleichstrom geführt. Hierbei erzeugt man die Reaktionsgase durch direkte Verbrennung von Erdgas im Drehrohrofen und Zuführung von Ammoniakgas und Wasserdampf. Dabei wird das Ammoniakgas mit der Aktivkohle zugeführt, während der Wasserdampf zusätzlich in den Reaktionsraum eingeblasen wird. In Beispiel 7 wird mit NH₃ und H₂O aktiviert, in Beispiel 8 nur mit H₂O.

In der Praxis wird der Drehrohrofen mit Erdgas auf eine Temperatur von ca. 920 °C vorgeheizt und danach die Kohle gemeinsam mit dem Ammoniakgas eindosiert. Der Transport der Aktivkohle durch den Ofen erfolgt durch die Rotation des Rohres, das zum Austrag geneigt ist. Die Aktivkohle, die den erfindungsgemäßen Prozeß durchlaufen hat, wird über eine Rohrschlange ausgetragen und gleichzeitig auf eine Temperatur < 200 °C abgekühlt. Die Verfahrensbedingungen waren wie folgt:

| für Beispiel 7 | |
|---|---|
| Aktivkohlemenge | 35 kg/h |
| Temperatur (Brennerregelung) | 900 bis 920 °C |
| Ammoniakgas | 2 bis 5 m³ N₃/h |
| H₂O-Dampf | 16 kg/h |
| Unterdruck | < 2 mm WS |
| Umlaufgeschwindigkeit | 100 Sek/Umdrehung |

| für Beispiel 8 | |
|---|---|
| Aktivkohlemenge | 35 kg/h |
| Temperatur | 900 bis 920 °C |
| H₂O-Dampf | 16 kg/h |
| Unterdruck | < 2 mm WS |
| Umlaufgeschwindigkeit | 100 Sek/Umdrehung |

Die in den Beispielen 7 und 8 erzeugten Verfahrensprodukte zeigten folgende Eigenschaften:

| | Beispiel 7 | Beispiel 8 |
|---|---|---|
| Jodzahl | 980 mg/g | 990 mg/g |
| | | |
| spezifi. Oberfläche | 850 m²/g | 820 m²/g |
| gemäß N₂-Adsorption | | |
| | | |
| Mikroporenvolumen | 0,346 cm³/g | 0,361 cm³/g |
| gemäß N₂-Adsorption | | |
| | | |
| H₂O₂-Zersetzung | | |
| Δ T nach 5 Min. | 11,5 K | 2,2 K |
| Δ T nach 10 Min. | 16,4 K | 3,5 K |
| | | |
| Stickstoffgehalt | 0,35 % | 0,1 % |
| | | |
| Dünnschichtbett (2 mm) | 41 mg/g | 43 mg/g |
| Adsorption von n-Butan | | |
| (80 ppm) | | |
| | | |
| Dünnschichtbett (2 mm) | | |
| Adsorption von Toluol | | |
| (80 ppm) | | |
| Durchbruch nach 5 Min. | 4% | 18 % |
| Kapazität | 250mg/g | 250 mg/g |
| Dünnschichtbett (2 mm) | | |
| SO₂-Durchbruch | | |
| nach 15 Min. | 14 % | 53% |
| nach 10 Min. | 16 % | 66 % |
| nach 15 Min. | 17 % | 78 % |
| umgesetzte SO₂-Menge | 38 mg/g | 12 mg/g |

### Beispiel 9

In einem weiteren Technikumsversuch wurde die Kohle vor dem Aktivierungsprozeß mit NH₃-Wasser (25 %ig) getränkt und in den Reaktor gegeben.

In diesem Fall wird am Anfang des Drehrohrofens neben der getränkten Kohle nur noch das Erdgas dazugegeben. In der Mitte des Reaktors bzw. nach der halben Reaktionszeit wird Wasserdampf hinzugefügt.

| | |
|---|---|
| Aktivkohlemenge | 50 kg/h |
| Temperatur | 900 bis 920 °C |
| NH₃-Wasser | 0,3 l/kg /17 l/h |
| H₂O-Dampf | 20 bis 40 kg/h |

Vor der H₂O-Dampf-Zugabe wurde eine Zwischenprobe 9a gezogen, das Endprodukt wurde mit 9b bezeichnet.

Beispiel 9a und 9b zeigten folgende Eigenschaften:

| | Beispiel 9a | Beispiel 9b |
|---|---|---|
| Jodzahl | 940 mg/g | 1070 mg/g |
| | | |
| H2O2-Zersetzung | | |
| Δ T nach 5 Min. | 25 K | 28 K |
| Δ T nach 10 Min. | 35 K | 40 K |
| | | |
| Dünnschichtbett (2 mm) | | |
| SO₂-Durchbruch | | |
| nach 5 Min. | 30 % | 18 % |
| nach 10 Min. | 38 % | 25 % |
| nach 15 Min. | 40 % | 28 % |
| umgesetzte SO₂-Menge | 30 mg/g | 37 mg/g |

Aus den vorstehend beschriebenen Beispielen geht zweifelsfrei hervor, daß es mit dem erfindungsgemäßen Verfahren überraschenderweise sehr einfach gelingt Aktivkohle mit erhöhter katalytischer Aktivität herzustellen. Insbesondere zeigt sich beim Vergleich der Eigenschaften der in den Beispielen 1 bis 6 hergestellten Aktivkohlen mit erhöhter katalytischer Aktivität mit denen des als Ausgangsmaterial eingesetzten Aktivkohlesubstrats, das die Verwendung eines Reaktionsgasgemisches, das NH₃, CO₂ und H₂O und optional N₂ enthält, bei der Aktivierung und Erhöhung des Stickstoffanteils zu besonders guten Ergebnissen führt. Es handelt sich vorliegend insbesondere auch um ein verfahrenstechnisch sehr einfaches Verfahren, da das als Ausgangsmaterial verwendete Aktivkohlesubstrat nur in einen Reaktor eingebracht, erwärmt und mit der Gasmischung versetzt werden muß.

Überraschenderweise konnte auch festgestellt werden, daß die in den Beispielen 2 und 3 hergestellten Aktivkohlen gegenüber dem als Ausgangsmaterial verwendeten Aktivkohlesubstrat eindeutig verbessertes Adsorptionsverhalten für n-Butan und Toluol aufwiesen. Die diesbezüglichen Werte sind nachfolgend angegeben:

| | Aktivkohlesubstrat | Beispiel 2 | Beispiel 3 |
|---|---|---|---|
| Dünnschichtbett (2 mm) Adsorptionsverhalten für n-Butan | | | |
| Sofortdurchbruch | 30,5% | 2,6 % | 9,8 % |
| Kapazität | 19 mg/g | 37 mg/g | 34 mg/g |
| Dünnschichtbett (2 mm) Adsorptionsverhalten für Toluol | | | |
| Durchbruch nach 5 Min. | 30, 2 % | 7,6 % | 6,2 % |
| Kapazität | 130 mg/g | 260 mg/g | 230 mg/g |

Dabei wird insbesondere deutlich, daß die erfindungsgemäße Gaszusammensetzung ursächlich für die besonderen Eigenschaften der nach dem erfindungsgemäßen Verfahren hergestellten Aktivkohle ist.

In den Beispielen 4 bis 6 ist der Einfluß der Temperatur auf die Eigenschaften des Verfahrensprodukts näher untersucht worden, und es hat sich gezeigt, daß die besten Verfahrensergebnisse in einem Temperaturbereich zwischen 880 und 950 °C erreicht werden.

Die Beispiele 7, 8 und 9 dienen zur Veranschaulichung einer technischen Durchführung des Verfahrens in einem Drehrohrofen. Die hierbei in den Verfahrensprodukten erzielten Eigenschaften sind wirtschaftlich ohne weiteres sinnvoll und nutzbar, so daß ein Verfahren zur Verfügung steht, das ohne weitere Anpassungen bereits in einem kommerziellen Maßstab einsetzbar ist.

Zusammenfassend ist festzustellen, daß das erfindungsgemäß Verfahren bereits dadurch die Reduktion des verfahrenstechnischen Aufwands - es ist im Grunde nur noch 1 Reaktionsschritt erforderlich - besondere Vorteile gegenüber Verfahren aus dem Stand der Technik bietet. Das Verfahren bleibt dabei durchaus variabel und kann an die jeweiligen gestellten Anforderungen hinsichtlich z.B. Aktivität der Aktivkohle oder Art des verwendeten Ausgangsmaterials ohne besonderen Aufwand angepaßt werden.

## Patentansprüche

1. Verfahren zur Herstellung von Aktivkohle mit erhöhter katalytischer Aktivität, wobei das Verfahren von einem Aktivkohlesubstrat ausgeht, insbesondere von einem Aktivkohlesubstrat auf der Basis von kohlenstoffhaltigen verkokbaren Rohstoffen, und folgende Verfahrensschritte umfaßt:
Aufheizen des Aktivkohlesubstrats bis zur Aktivierungstemperatur durch Kontaktieren mit einem Reaktionsgasgemisch, das NH₃ und CO₂ und/oder H₂O enthält, wobei gleichzeitig eine Aktivierung erfolgt, und
Abkühlen des so aktivierten Aktivkohlesubstrats unter Reaktionsgasgemisch-Atmosphäre.

2. Verfahren zur Herstellung von Aktivkohle mit erhöhter katalytischer Aktivität, wobei das Verfahren von einem Aktivkohlesubstrat ausgeht, insbesondere von einem Aktivkohlesubstrat auf der Basis von kohlestoffhaltigen verkokbaren Rohstoffen und folgende Verfahrensschritte umfasst:
Tränken des Aktivkohlesubstrats mit Ammoniak-Wasser
Aufheizen des Aktivkohlesubstrats bis zur Aktivierungstemperatur durch Kontaktieren mit CO₂ und/oder H₂O wobei gleichzeitig eine Aktivierung erfolgt, und
Abkühlen des so aktivierten Aktivkohlesubstrats unter Reaktionsatmosphäre.

3. Verfahren gemäß Anspruch 1 oder 2,
**dadurch gekennzeichnet,**
**daß** das zum Kontaktieren des Aktivkohlesubstrats verwendete Gas oder Gasgemisch weiterhin N₂ enthält.

4. Verfahren gemäß einem der Ansprüche 1 bis 3,
**dadurch gekennzeichnet,**
**daß** das Aufheizen durch Einführen des Aktivkohlesubstrats in einen auf Aktivierungstemperatur vorgeheizten Aktivierungsreaktor erfolgt und beendet ist, wenn das Aktivkohlesubstrat die gewünschte Aktivität erreicht hat.

5. Verfahren gemäß einem der Ansprüche 1 bis 4,
**dadurch gekennzeichnet,**
**daß** die Aktivierungstemperatur 800 bis 970 °C beträgt, bevorzugt 880 bis 950 °C.

6. Verfahren gemäß einem der Ansprüche 1 bis 5,
**dadurch gekennzeichnet,**
**daß** das zum Aktivieren des aufgeheizten Aktivkohlesubstrats verwendete Gasgemisch 1 bis 20 Vol.-% NH₃, 10 bis 60 Vol.-% H₂O und 5 bis 50 Vol.-% CO₂ enthält, bevorzugt 1 bis 10 Vol.-% NH₃, 10 bis 30 Vol.-% H₂O und 5 bis 15 Vol.-% CO₂.

7. Verfahren gemäß einem der vorhergehenden Ansprüche,
**dadurch gekennzeichnet,**
**daß** das Aktivieren über einen Zeitraum von 30 bis 120 Minuten erfolgt.

8. Verfahren gemäß einem der vorhergehenden Ansprüche,
**dadurch gekennzeichnet,**
**daß** das Aktivkohlesubstrat eine aus Kokosnußschalen, Steinkohle, Fruchtkernschale, Braunkohlekoks sowie aus Polymeren hergestellte Aktivkohle ist.

9. Verfahren gemäß einem der vorhergehenden Ansprüche,
**dadurch gekennzeichnet,**
**daß** das Abkühlen des aktivierten Aktivkohlesubstrats bis zu einer Temperatur < 200 °C durchgeführt wird.

## Claims

1. A process for producing active carbon with increased catalytic activity, wherein the process starts from an active carbon substrate, in particular an active carbon substrate on the basis of carbon-bearing cokable raw materials, and includes the following process steps:
heating the active carbon substrate to the activation temperature by contacting it with a reaction gas mixture which contains NH₃ and CO₂ and/or H₂O, wherein activation is effected at the same time, and
cooling the active carbon substrate which is activated in that way in a reaction gas mixture atmosphere.

2. A process for producing active carbon with increased catalytic activity, wherein the process starts from an active carbon substrate, in particular an active carbon substrate on the basis of carbon-bearing cokable raw materials, and includes the following process steps:
impregnating the active carbon substrate with ammonia water,
heating the active carbon substrate to the activation temperature by contacting it with CO₂ and/or H₂O, wherein activation is effected at the same time, and
cooling the active carbon substrate which is activated in that way in a reaction atmosphere.

3. A process as set forth in claim 1 or claim 2 **characterized in that** the gas or gas mixture used for contacting the active carbon substrate further contains N₂.

4. A process as set forth in one of claims 1 through 3 **characterized in that** the heating operation is effected by introducing the active carbon substrate into an activation reactor which is preheated to activation temperature and is concluded when the active carbon substrate has reached the desired activity.

5. A process as set forth in one of claims 1 through 4 **characterized in that** the activation temperature is from 800 and 970°C, preferably from 880 and 950°C.

6. A process as set forth in one of claims 1 through 5 **characterized in that** the gas mixture used for activation of the heated active carbon substrate contains from 1 and 20 % by volume of NH₃, from 10 and 60 % by volume of H₂O and from 5 and 50 % by volume of CO₂, preferably from 1 and 10 % by volume of NH₃, from 10 and 30 % by volume of H₂O and from 5 and 15 % by volume of CO₂.

7. A process as set forth in one of the preceding claims **characterized in that** activation is effected over a period from 30 and 120 minutes.

8. A process as set forth in one of the preceding claims **characterized in that** the active carbon substrate is an active carbon produced from coconut shells, pit coal, fruit stone shell, brown coal coke and polymers.

9. A process as set forth in one of the preceding claims **characterized in that** the operation of cooling the activated active carbon substrate is effected to a temperature <200°C.

## Revendications

1. Procédé de fabrication de charbon actif à activité catalytique augmentée, dans lequel le procédé part d'un substrat de charbon actif, en particulier d'un substrat de charbon actif à base de matières premières cokéfiables contenant du carbone, et comprend les étapes de procédé suivantes :
chauffage du substrat de charbon actif jusqu'à la température d'activation par mise en contact avec un mélange réactionnel gazeux comportant du NH₃ et du CO₂ et/ou du H₂O, une activation ayant lieu en même temps, et
refroidissement du substrat de charbon actif ainsi activé sous atmosphère de mélange réactionnel gazeux.

2. Procédé de fabrication de charbon actif à activité catalytique augmentée, dans lequel le procédé part d'un substrat de charbon actif, en particulier d'un substrat de charbon actif à base de matières premières cokéfiables contenant du carbone, et comprend les étapes de procédé suivantes :
imprégnation du substrat de charbon actif avec de l'eau ammoniacale,
chauffage du substrat de charbon actif jusqu'à la température d'activation par mise en contact avec du CO₂ et/ou du H₂O, une activation ayant lieu en même temps, et
refroidissement du substrat de charbon actif ainsi activé sous atmosphère réactionnelle.

3. Procédé selon la revendication 1 ou 2, **caractérisé en ce que** le gaz ou mélange gazeux utilisé pour la mise en contact avec le substrat de charbon actif contient en outre du N₂.

4. Procédé selon l'une des revendications 1 à 3, **caractérisé en ce que** le chauffage se fait en introduisant le substrat de charbon actif dans un réacteur d'activation préchauffé à la température d'activation et **en ce qu'**il est terminé lorsque le substrat de charbon actif a atteint l'activité souhaitée.

5. Procédé selon l'une des revendications 1 à 4, **caractérisé en ce que** la température d'activation est de 800 à 970°C, de préférence de 880 à 950°C.

6. Procédé selon l'une des revendications 1 à 5, **caractérisé en ce que** le mélange gazeux utilisé pour activer le substrat de charbon actif chauffé contient de 1 à 20% en volume de NH₃, de 10 à 60% en volume de H₂O et de 5 à 50% en volume de CO₂, de préférence de 1 à 10% en volume de NH₃, de 10 à 30% en volume de H₂O et de 5 à 15% en volume de CO₂.

7. Procédé selon l'une des revendications précédentes, **caractérisé en ce que** l'activation se fait pendant une durée de 30 à 120 minutes.

8. Procédé selon l'une des revendications précédentes, **caractérisé en ce que** le substrat de charbon actif est un charbon actif obtenu à partir de coques de noix de coco, de houille, de coquilles de noyaux de fruits, de coke de lignite ainsi qu'à partir de polymères.

9. Procédé selon l'une des revendications précédentes, **caractérisé en ce que** le refroidissement du substrat de charbon actif activé s'effectue jusqu'à une température inférieure à 200°C.
